**Europäisches Patentamt**

**European Patent Office**

**Office européen des brevets**

(19)

(11) Veröffentlichungsnummer : **0 369 358 B1**

(12) **EUROPÄISCHE PATENTSCHRIFT**

(45) Veröffentlichungstag der Patentschrift :
08.07.92 Patentblatt 92/28

(51) Int. Cl.$^5$ : **B60P 3/22, B60P 3/24**

(21) Anmeldenummer : **89120929.8**

(22) Anmeldetag : **11.11.89**

(54) **Behälterfahrzeug.**

(30) Priorität : **15.11.88 DE 8814273 U**

(43) Veröffentlichungstag der Anmeldung :
**23.05.90 Patentblatt 90/21**

(45) Bekanntmachung des Hinweises auf die
Patenterteilung :
**08.07.92 Patentblatt 92/28**

(84) Benannte Vertragsstaaten :
**AT BE CH DE FR GB IT LI NL**

(56) Entgegenhaltungen :
**DE-A- 1 580 567**
**DE-A- 2 209 484**
**DE-A- 3 301 610**
**FR-A- 1 387 106**
**FR-A- 2 514 333**
**US-A- 1 661 324**
**US-A- 2 098 522**

(73) Patentinhaber : **Wilcke, Hans**
**Gotenstrasse 9**
**W-5484 Bad Breisig (DE)**

(72) Erfinder : **Wilcke, Hans**
**Gotenstrasse 9**
**W-5484 Bad Breisig (DE)**

## Beschreibung

Die Erfindung betrifft ein Transportfahrzeug für flüssige und andere tanktransportfähige Güter, insbesondere gefährliche Güter, vornehmlich, aber nicht ausschließlich als Sattelauflieger oder Anhänger ausgeführt, vornehmlich mit Luftfederung ausgestattet, dadurch gekennzeichnet, daß Teile des Transportbehälters den Raum zwischen den Fahrzeugrädern in Längs- und Querrichtung einnehmen und die Unterkante des Transportbehälters unterhalb oder in der Nähe der Drehachse der Fahrzeugräder liegt, nicht zum Behälter gehörige Teile des Fahrzeugs weitgehend den Behälter schützend angebracht sind und ferner das Fahrzeug mit weiteren, die Sicherheit des Fahrzeugs im Verkehr und bei Unfällen wesentlich erhöhenden Merkmalen ausgestattet ist.

Bekannte Tankfahrzeuge haben Behälter, die auf den Fahrzeugrahmen oder auf das Fahrwerk aufgesetzt sind. Ihre Resistenz gegen Fremdeinwirkung z.B. bei Verkehrsunfällen, beruht allein auf der Festigkeit des Transportbehälters. Widerstandskräfte, die aus dem Fahrzeugrahmen und sonstigen Teilen des Fahrzeugs, z.B. den Rädern, ableitbar wären bleiben weitgehend ungenutzt.

Weiter sind bekannte Transportfahrzeuge für flüssige Güter mit am Fahrzeug fest angebrachten Behältern versehen. Ihr Ladegut kann daher nur im Straßentransport ohne Umladung bewegt werden, der Transport im kombinierten Verkehr SchieneStraße oder Wasserstraße - Straße ist angewiesen auf die geringe Anzahl von Umschlagplätzen, an denen die Transportbehälter einschließlich Fahrgestell vornehmlich rollend umgeschlagen werden können.

Die bekannten Transportfahrzeuge mit Behältern zum Transport gefährlicher Güter zeichnen sich bisher durch eine hohe Schwerpunktlage des beladenen Fahrzeugs aus. Bei extremen Verkehrssituationen neigen sie daher dazu, umzustürzen und ihren Inhalt in die Umwelt zu entlassen.

Bekannte Transportfahrzeuge besitzen wegen ihrer an den Maximalwerten der Längenausdehnung nach gesetzlichen Vorschriften orientierten Abmessungen eine große Angriffsfläche für Fremdeinwirkungen von der Seite.

Bekannte Trailer für Container und damit auch für Flüssigkeits-Container besitzen ebenfalls eine hohe Schwerpunktlage und zeichnen sich durch hohe Umsturzgefahr bei Unfällen aus.

Weiter sind Transportfahrzeuge nicht mit Einrichtungen versehen, um die Schwerpunktlage bei hohen zulässigen Geschwindigkeiten auf ebenen Straßen abzusenken, bei Fahrten mit geringer Geschwindigkeit im Bereich von Bodenunebenheiten dagegen die Bodenfreiheit des Fahrzeugs zu erhöhen. Bekannte Transportfahrzeuge sind zur Herabsetzung ihrer Geschwindigkeit bis zum Stillstand bei extremen Verkehrssituationen allein auf die Nutzung und Wirksamkeit der installierten Bremsanlagen und ihrer Betätigung durch den verantwortlichen Fahrer angewiesen.

Bekannte Fahrzeuge mit ihren Transportbehältern für flüssige Güter haben wegen der gesetzlichen Vorschrift zur nicht vollständigen Beladung eine beachtliche freie Flüssigkeitsoberfläche, die bei Kurvenfahrten eine Verschiebung der Flüssigkeit nach außen und damit eine Schwerpunktverlagerung und zusätzliche dynamische Kräfte auslösen, die die Kurvenfahrt erschweren und in Extremfällen ein Umstürzen begünstigen. Bekannte Fahrzeuge mit ihren Transportbehältern erfordern einen beidseitig geneigten Behälterboden und Abflußleitungen unterhalb des Behälters, die ein Niedrighalten des Fahrzeugschwerpunktes negativ beeinflußen und die Behälterherstellung erschweren.

Das Dokument US-A- 2 098 522 kann als Stand der Technik angesehen werden. Hier wird ein Tankahrzeug dargestellt, bei dem Teile des Behälters zwischen den Rädern angeordnet sind, Die im Dokument dargestellte Gestaltung des Fahrwerks läßt aber eine Anordnung des Behälterbodens signifikant unter der Höhe der Radachsen nicht zu, Die hier gewählte Gestaltung des Fahrwerks läßt weder eine optimale Herabsetzung des Fahrzeugschwerpunktes zu noch die Ab senkung des Fahrzeugrahmens auf den-Boen zur Notbremsung noch erlaubt sie die Erfüllung der sonstigen Aufgabenstellungen dieser Erfindung.

Mit Dokument DE A 158 05 67 wird auf flexible Innenbehälter mit auf Zug beanspruchten Seilen gegen den Innendruck verwiesen, die mit diesen Seilen etwa formstabil gehalten werden, Die in der vorliegenden Erfindung 89 120 929.8 dargestellten, ggflls, durch den Behälter quer durchlaufenden Bauteile Rammschutzverstärkung (10) mit stoßverzehrenden Elementen (11) und Rahmen-Querstützen (12) sind zur Aufnahme von Druckkräften bestimmt, dafür sind Seile ungeeignet.

Mit Dokument DE A 330 16 10 wird auf gegen die Fahrbahn wirkende Bremsbeläge hingewiesen, Zu ihrer in Wirkungsetzung werden mechanische Mittel gefordert, die den erforderlichen Anpreßdruck erzeugen.

In der hier vorliegenden Erfindung wird nicht in besonderen Bauteilen Druck aufgebaut, um die Bremswirkung zu erzeugen, sondern im Gegenteil Druck in den Luftfedern abgebaut, um die bremsenden Beläge in Wirkung zu bringen.

Mit Dokument DE A 22 09 484 wird auf einen als Druckbehälter ausgebildeten Container hingewiesen. Dieser Container wie auch andere in Nutzung befindliche Container sind für die Zwecke dieser Erfindung nicht nutzbar, weil ihre äußere Gestaltung einen Einsatz mit dem erfindungsgemäßen Fahrzeug unter Ausschöpfung der erfindungsgemäß geforderten Sicherheitsstandards nicht zuläßt.

Mit Dokument US 166 1324 wird auf Tank-Stirnwände hingewiesen, die konzentrisch wellenförmig ausgebildet sind, Trotz des äußeren Anscheins besteht jedoch kein wie immer gearteter innerer Zusammenhang zu der erfindungsgemäßen Gestaltung dieser Anmeldung.

Das US-Dokument betrifft Außenwände von Tanks, die zur Gewichtsersparnis und zur Vermeidung von Deformationen konzentrisch wellenförmig gestaltet sind.

Diese Erfindung betrifft allein die Ausgestaltung von inneren Verbindungswänden im Behälter mit insoweit beidseitiger Berührung durch das Transportgut. Die wellenförmige Ausführung der Zwischenwände soll gerade erfindundgsgemäß eine Deformation zulassen, in sofern ist auch eine Ausbildung der Zwischenwand aus flexiblem Material erfindungsgerecht, aber mit dem Stand der Technik nach Dokument US A 166 13 24 nicht vereinbar.

Aufgabe dieser Erfindung ist es, ein für den kombinierten Verkehr geeignetes Behälterfahrzeug mit minimierten Sicherheitsrisiken und verbessertem Betriebsverhalten vorzustellen, vor allem ausgezeichnet durch

– niedrige Schwerpunktlage,

– Vermindern der seitlichen Angriffsflächen für Fremdeinwirkungen und Optimierbarkeit beider Faktoren,

– Schutz des B ehälters gegen Fremdeinwirkungen durch Nutzung des Fahrzeug-Tragwerks für Schutzzwecke,

– Verminderung der Berstgefahr,

– Minderung der Zentrifugalkräfte bei Kurvenfahrt,

– Veränderung der Schwerpunktlage und Bodenfreiheit während des Betriebes,

– automatische Geschwindigkeitsreduzierung bei Überschreiten von Maximalwerten,

– von Betriebsbremsen unabhängiges Notbremssystem,

– restlose Behälterentleerung bei flachem Behälterboden.

Die Aufgabe wird durch die Merkmale des Anspruchs 1 gelöst, weitere vorteilhafte Ausgestaltungen der Erfindung werden in den Unteransprüchen ausgebildet.

Behälterfahrzeuge gemäß dieser Erfindung bieten neben den wesentlich verbesserten Sicherheits-Vorkehrungen und entsprechendem Betriebsverhslten weitere Nutzungsvorteile:

– Transport gefährlicher Güter im kombinierten Verkehr Schiene - Straße und Straße - Wasserstraße bei minimalem Straßentransportanteil,

– Kombinierbarkeit des Transportsystems mit eingeführten weltweiten Transportsystemen, z.B. dem ISO-Containerverkehr,

– Nutzung dieser Fahrzeuge auch für Transporte herkömmlicher Art, z.B. Container-Transporte,

– Transport der Fahrzeuge auf üblichen Eisenbahnwaggons normaler Ladebodenhöhe unter Einhaltung des internationalen Lademaßes mit vereinfachter Verzurrung,

– Übergang vom Schienen- zum Straßentransport über jede Bahn-Kopframpe ohne Umschlag-Hilfsmittel ( Container-Kräne, Roll-on- Roll-off-Anlagen) in der Nähe der Absender/Empfänger und damit Verkürzung das Straßentransportanteils am Transportvorgang,

– Erhöhen der Manövrierfähigkeit von Sattelzügen, z.B. beim Aufsuchen von Entladeplätzen (Tankstellen).

Im folgenden wird die Erfindung anhand von Zeichnungen näher erläutert. Dabei zeigen die Zeichnungen lediglich einzelne Ausführungsbeispiele. Andere erfindungsgemäße Gestaltungen sind denkbar.

Fig 1 zeigt einen erfindungsgemäßen Sattelzug in Seitenansicht,

Fig. 2 und 3 zeigen Schnitt-Ansichten des Tankaufliegers,

Fig. 4 und 5 eine Ausführungsform der Tankzwischenwand mit Volumensausgleich,

Fig. 6 eine Sattelauflieger, ausgelegt für den Transport von speziellen Tank-Containern gemäß dieser Erfindung und von herkömmlichen Containern und

Fig. 7 einen erfindungsgemäß gestalteten Tank-Container.

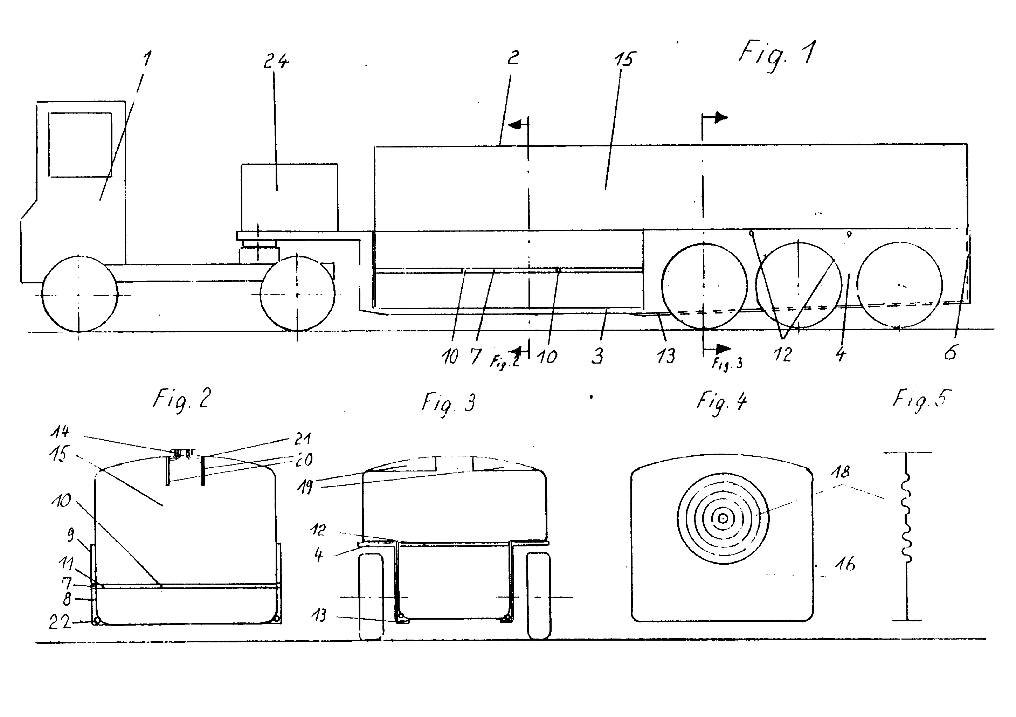

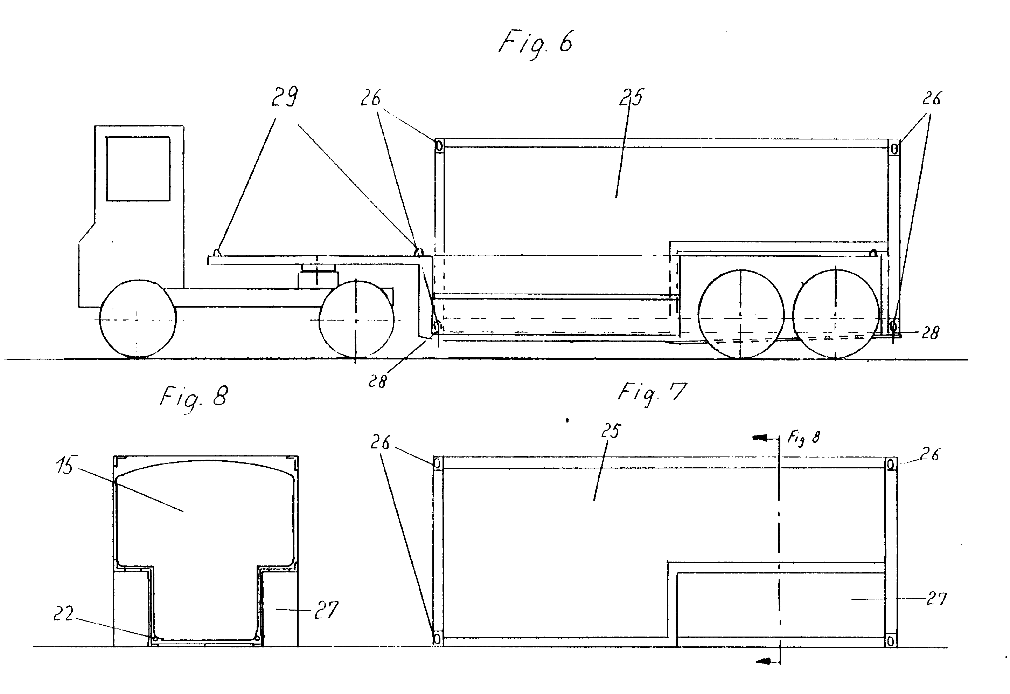

In Fig. 1 ist die Sattelzugmaschine (1) herkömmlicher Bauart erkennbar und der Tankauflieger (2).Der hintere Teil des Auflieger-Rahmens ist in Form von Radkästen (4) ausgebildet mit bekannter Einzelrad-Aufhängung und Luftfederung (5). Die Unterkante der Radkästen ist nach hinten leicht ansteigend ausgeführt, sodaß bei abgesenktem Radkasten seine gesamte Unterkante auf dem Boden aufliegt. Unter den Radkästen (4) ist der B remsbelag (13) angebracht. Die Bremsbeläge (13) sind aus Materialien gefertigt, die beim Bremsvorgang keine Funken erzeugen. Die Bremsbeläge können mit rasterförmigen Strukturen versehen sein, um eine hinreichende Bremswirkung auch auf z.B. schneeglatter Fahrbahn sicherzustellen. Die Bremsbeläge (13) bezw. die Rahmenteile, an denen sie befestigt sind, können zusätzlich mit lösbaren B ezügen versehen werden, die auch auf Schnee und Eis ausreichende Bremswirkung erzeugen.

Die beiden Radkästen (4) sind hinten mit einer Rahmenrückwand (6) verbunden, die gleichzeitig als hinterer Rammschutz ausgebildet ist.

Der vordere Teil des Rahmens (3) ist vornehmlich in voller Fahrzeugbreite ausgeführt.

Zwischen den Radkästen (4) und dem vorderen senkrechten Rahmenteil ist ein seitlicher Rammschutz angebracht, der als tragender Teil des Rahmenvorderteils ausgebildet sein kann. Die beiden seitlichen Rammschutzteile (7) des Rahmens (3) können untereinander quer zur Fahrtrichtung durch im Tankraum (15) liegende Rammschutz-Verstärkungen (10) über die senkrechten Tankwände verbunden sein.

Alternativ können die Rammschutz-Verstärkungen (10) in einem mit den Seitenwänden des Tankraums fest verbundenen Mantelrohr untergebracht und über stoßenergieverzehrende Elemente (11) mit dem seitlichen Rammschutz verbunden sein.

Die Außenverkleidung (9) kann selbst stoßenergieverzehrend ausgestaltet sein oder der Raum zwischen der Außenverkleidung (9) und den senkrechten Tankwänden mit stoßenergievermindernden Materialien ausgefüllt sein.

Die Radkästen (4) können mit Radkasten-Querstützen (12) in Anlehnung an die geschilderte Gestaltung der Rammschutzverstärkungen (10) ausgestaltet sein.

Die Tankeinfüll-Öffnungen (14) sind mit dichtschließenden Verschlüssen versehen, die einem dem Berstdruck des Tankraums entsprechenden Innendruck widerstehen.

Für Tankräume (15) mit mehreren untereinander dichten Kammern können die Zwischenwände (16) erfindungsgemäß mit einer Volumenausgleichs-Vorrichtung versehen sein. Eine denkbare Ausführung zeigen Fig. 4 und 5. Die Zwischenwand (16) ist konzentrisch wellenförmig gestaltet (18). Tritt z.B. bei einem Unfall durch eine Einbeulung von außen eine Volumensverminderung einer Kammer ein, so würde in der Regel durch Druckerhöhung im Inneren der Kammer dieselbe von innen heraus bersten, sobald die Druckerhöhung und Volumensverminderung die Festigkeitswerte der Kammer überschreitet. Ist die oder sind die erfindungsgemäß gestalteten Zwischenwände (16,18) eingebaut, so beulen sich diese Zwischenwände zu den benachbarten Kammern hin aus und geben einen Teil der entstandenen Volumensveränderung an die benachbarten Kammern weiter. Auf diese Weise steht bei vorschriftsmäßiger Beladung (95% des Tankvolumens) nicht nur das Luftpolster von 5 % einer Kammer, sondern letztlich das Luftpolster von 5 % des gesamten Behältervolumens zum Ausgleich der entstandenen Volumensverminderung in der betroffenen Kammer zur Verfügung. dies dürfte in aller Regel ein Bersten der eingedrückten Kammer oder des gesamten Tankraums verhindern.

Um den geschilderten , erfindungsgemäßen Zweck zu erreichen, ist der wellenförmig gestaltete Teile der Zwischenwände (18) in seiner Festigkeit so ausgelegt, daß die Verformung beginnt, noch ehe der Berstdruck in einer Kammer erreicht wird.

Der wellenförmig gestaltete Bereich kann auch zur einen Teil der Zwischenwand bedecken.

Alternativ zu der wellenförmig Gestaltung der metallenen Zwischenwände (16) können diese ganz oder teilweise aus ladungsresistenten elastischen Materialien hergestellt sein. Als weiterer Berstschutz für den Tankraum sind erfindungsgemäß zusammenpreßbare Polster (19) vorgesehen, die im Tankraum angebracht sind. Sie bestehen aus voluminösen, leicht zusammenpreßbaren Stoffen (z.B. Schaumstoffen), die sich in einer Hülle aus ladungsresistenten elastischem flexiblen Material befinden. Die Festigkeitswerte der Polster (29) sind so ausgewählt, daß sie bei normalen Betriebsvorgängen einschließlich Kurvenfahrt keine Volumensveränderung erfahren, aber bei Druckanstieg in der Kammer z.B. bei einem Einbeulvorgang, die Polster (19) auf einen geringen Teil ihres Ausgangsvolumens zusammengepreßt werden, noch ehe der Berstdruck der Kammer erreicht ist und sie damit ein Bersten der Kammer verhüten. Grundsätzlich können die Polster (19) überall innerhalb der Kammer angebracht werden. Werden sie der Formgebung der Tankdecke angepaßt, beidseitig von der Mitte des Tankraums angebracht (vergl. Fig. 3) und der mittlere Freiraum so gewählt, daß er mehr als 5 % des Tankinhalts ausmacht, so kann die gleiche vorteilhafte Wirkung erzielt werden, wie sie nach-folgend bei der Behandlung der Schwallbleche (20) beschrieben wird.

Die Verwendung der zusammenpreßbaren Polster (19) eignet sich besonders zur Nachrüstung bereits vorhandener Fahrzeuge.

Es ist weiterhin denkbar, daß die zusammenpreßbaren Polster (19) als Ersatz für die weitgehend vorgeschriebene Füllungsbegrenzung auf 95% des Tankvolumens anerkannt werden und dadurch die Bildung von explosiblen Gas-Luft-Gemischen ausgeschlossen bzw. eine luftfreie Tankfüllung bei luftempfindlichen Ladegütern unter Einhaltung der Ladevorschriften möglich ist.

Die zusammenpreßbaren Polster (19) können aus baukastenförmig zusammenstellbaren Teilen bestehen, um ein leichtes Nachrüsten vorhandener Tankfahrzeuge zu ermöglichen. Weiterhin ist der Tankraum (15) innen mit in Fahrzeuglängsrichtung angebrachten Schwallblechen (20) ausgestattet, die dicht mit Tankdecke und Seitenwänden verbunden sind und in den Tankraum hineinragen. Diese Schwallbleche verhindern, daß bei Kurvenfahrt die Flüssigkeit durch Fliehkraft sich über die ganze Fahrzeugbreite nach außen bewegen kann und so die Kurvenfahrt des Fahrzeugs beeinträchtigt und oder Kippmomente unterstützt. Durch Erhöhung der Anzahl der angebrachten parallelen Schwallbleche (20) ist die Größe der verbleibenden Restmomente beeinflußbar.

Die durch die Schwallbleche (20) entstandenen einzel nen Teilkammern sind über Entlüftungsleitungen (21) beim Be- und Entladen belüftbar, sodaß eine ungehinderte Füllung/Entleerung sichergestellt ist. Die Entlüftlungsleitungen können so positioniert sein, daß eine Überschreitung der zulässigen Füllmengen ausgeschlossen ist.

Die Entlüftungsleitungen (21) können angebracht sein, daß ihre oberen Öffnungen durch Schließen des Tankdeckels dicht verschlossen werden. Alternativ können erfindungsgemäß Ventile in die Entlüftungsleitungen eingebaut sein, die durch zwangsweise Betätigung gekoppelt an andere Lade/Entladefunktionen die Leitungen (21) nur beim Be- und Entladen öffnen. Die Entleerungs-/Fülleitungen (22) sind entweder in den Tankraum (15) unten seitlich integriert oder im Rahmen (3) eingebaut (vergl. Fig. 2). Sie können Bestandteil der tragenden Rahmenkonstruktion sein oder es kann der Rahmen selbst als Leitung genutzt werden.

Die Luftfedern (5) sind so ausgelegt, daß durch Entlüftung sich der Fahrzeugrahmen (3) bis auf den Boden absenkt und das Fahrzeuggewicht sich ganz oder teilweise dem Boden mitteilt. In einer zweiten Betriebsstellung halten die Luftfedern (5) den Fahrzeugrahmen in einer geringen Bodenfreiheit zur Fahrt mit hohen Geschwindigkeiten auf ebenen guten Straßen, mit tiefstmöglichem Fahrzeugschwerpunkt und in einer dritten Stellung mit größtmöglicher Bodenfreiheit zur Fahrt mit geringen Geschwindikeiten auf unebenen Fahrbahnen.

Die Luftfedern (5) sind ferner im Stand so regulierbar, daß eine Fahrzeugseite abgesenkt und die andere Fahrzeugseite größtmöglich angehoben ist, sodaß der normal ebene Boden des Tankraums (15) einseitig geneigt und damit eine vollständige Entleerung sichergestellt ist.

Weiterhin kanndurch unterschiedliche Luftfederfüllung für die vorderen oder hinteren Räder beim Entladen eine Neigung in Fahrzeuglängsrichtung zur vollständigen Entleerung auch bei unebener Standfläche erzeugt werden.

B ei ausreichenden Neigungswinkeln kann auf eine beidseitige Verlegung der Entleerungsleitungen (22) verzichtet oder die Leitung jeder Seite bestimmten Funktionen (z.B. unterschiedlichen Flüssigkeiten) zugeordnet werden.

Die geschilderten Luftfederfüllungen im Stand werden entweder von Hand oder über eine vorprogrammierten Geber (23) elektronisch gesteuert.

Darüber hinaus ist entweder das Zugfahrzeug (1) oder das Tankfahrzeug (2) mit einem geschwindigkeitsabhängigen Impulsgeber (23) ausgestattet, der die Luftfederfüllung in Fahrt steuert. Folgende Impulse können vorgesehen sein:

– bei niedrigen Geschwindigkeiten weitgehende oder größtmögliche Füllung der Luftfedern zur Erzielung einer großen Bodenfreiheit des Fahrzeugs,

– geringere Luftfüllung und damit geringere Bodenfreiheit und abgesenkter Gewichtsschwerpunkt bei höherer Geschwindigkeit,

– Auslösen von optischen und/oder akustischen Warnzeichen für den Fahrer im Zugfahrzeug bei Überschreiten der zulässigen Höchstgeschwindigkeit,

– bei Überschreiten einer bestimmten Geschwindigkeit (Höchstgeschwindigkeit + Wert A) abgestuftes Betätigen der Betriebsbremsanalge nur des Anhängers oder von Anhänger und Zugfahrzeug und Beendigen der Bremsung bei Unterschreiten der Höchstgeschindigkeit + Wert A,

– bei weiterem Überschreiten einer bestimmten Geschwindigkeit (Höchstgeschwindigkeit + Wert A + Wert B) (Notbremsung) zweckentsprechendes Entlüften der Luftfedern (5), sodaß der Fahrzeugrahmen (3) mit seinen Bremsbelägen (13) mit der Fahrbahn in Berührung kommt und das Fahrzeug bis zum Stillstand abbremst, auch wenn die Betriebs-Bremsanlage keine hinreichende Verzögerung erzeugt.

Die die Betriebs-Bremsanlage beeinflußenden Impulse können mit herkömmlichen Bremssteuerungen kombiniert sein.

Die vom Impulsgeber (25) auslösbaren Steuervorgänge können auch durch manuelle Tätigkeit des Fahrers auslösbar oder sonst beeinflußbar gestaltet sein.

Der Raum (24) oberhalb des auf das Zugfahrzeug (1) übergreifenden Rahmenteils kann Hilfseinrichtungen (Pumpen, Filter, Meßeinrichtungen) aufnehmen oder zusätzlich als Tankraum genutzt werden.

In einer besonderen Ausführungsform gemäß dieser Erfindung kann der Aufliegerrahmen (3) des Tankaufliegers (2) ganz oder teilweise durch eine selbsttragende Konstruktion des Tankraums (15) ersetzt sein. Ein solcher selbsttragender Tankraum (15) kann in Verfolgung der Gestaltungsgedanken dieser Erfindung mit geeigneten Anbauten, Verstärkungen oder sonstigen Konstruktionsteilen versehen sein.

In einer weiteren Ausführungsform kann ein Tankfahrzeug gemäß dieser Erfindung auch als Anhänger mit lenkbarer Vorderachse ausgeführt sein.

Eine weitere Ausführung des erfindungsgemäßen Tankaufliegers zeigt Fig. 6. Sie dient dem Transport von Tank-Containern nach ISO-Norm und anderen Normen.

Für diese Transportform ist der Tankcontainer (25) (Fig.7) unter Einhaltung der Außenabmessungen und Anschlußmaße (Eckbeschläge 26) geringfügig so modifiziert, daß er einerseits von oben in den verengten La-

EP 0 369 358 B1

deraum zwischen den Radkästen (4) durch Anbringen von Radkastentaschen (27) eingebracht,und mit den Container-Verriegelungen (28) für den Transport sicher mit dem Fahrzeug verbunden werden kann, andererseits aber durch Einhalten der Anschluß- und Außenmaße gemäß Norm in allen Container-Transportketten (Schiene, Straße, Binnenschiff, Seeschiff) transportiert und mit vorhandenen Einrichtungen umgeschlagen werden kann.

In einer weiteren Gestaltungen des Tankcontainers (25) erstecken sich die Radkastentaschen (27) über die ganze Länge des Behälters. Dadurch liegt zwar der Schwerpunkt des beladenen Containers etwas höher, der Schwerpunkt des beladenen Container liegt aber bezogen auf die Längsachse mittig und erleichtert das Umschlagen, zudem kann er auch ohne Drehen um die senkrechte Achse in jedem Falle auf den Tankauflieger verladen werden.

Zum Transport herkömmlicher Container aller Art sind Containerverriegelungen (29) vorgesehen. Unter Ausnutzung des auf auf die Sattelzugmaschine (1) übergreifenden Rahmenteils können auch Container der nächsten Größenordnung transportiert werden.

Zur bestmöglichen Ausnutzung von Achslasten und verfügbarem Rauminhalt dürfte es in der Regel zweckmäßig sein, für den Transport von Ladegut bis 20 t die Maße des 20-Fuß-Containers zugrundezulegen mit einer zweiachsigen Gestaltung des Aufliegers und der zusätzlichen Fähigkeit zum Transport herkömmlicher 20-Fuß- und 30 Fuß-Containern, für darüber liegende Transportgewichte erfindungsgemäße 30-Fuß Container mit einer dreiachsigen Auslegung des Aufliegers und der zusätzlichen Fähigkeit zum Transport von herkömmlichen 30-Fuß- und 40-Fuß-Containern vorzusehen.

Die grundlegenden Gedanken der vorliegenden Erfindung
– einerseits durch tiefliegende Anordnung des Tankraums (15) fest eingebaut oder in Containerform eine wesentliche Tieferlegung des Fahrzeugschwerpunktes zu bewirken, wobei bei gleichem Volumen durch jede Verlängerung des Fahrzeugs sich eine Herabsetzung des Schwerpunktes ergibt,
– und andererseits durch wesentliche Vergrößerung des Tankinhalts pro lfd. Meter Fahrzeuglänge bei gleichem Volumen eine wesentlich Verkürzung des Fahrzeugs gegenüber herkömmlichen Tankaufliegern zu bewirken und damit die mögliche Angriffsfläche für seitliche Fremdeinwirkungen und Beschädigungen signifikant herabzusetzen und zugleich Materialgewicht einzusparen,
erlaubt die Herstellung eines Tankaufliegers, für den beide Gefahrenpotentiale unter gegenseitiger Abwägung minimiert sind und weitere Gefahrenpotentiale zweckentsprechend reduziert werden können.

Insbesondere erlaubt die Erfindung eine vom Fahrer unabhängige Begrenzung der Höchstgeschwindigkeit und Notbremsung im Gefahrenfall.

Die Erfindung wertet die Möglichkeiten der Luftfederung in vielfältiger Weise aus.

Die Eigenart der Erfindung ermöglicht eine Minderung des Straßentransportanteils im kombinierten Verkehr und eine Einbindung in die verschiedenen vorhandenen Container-Transportketten.

Die niedrige Bauhöhe erlaubt den Transport der Auflieger auf allen bekannten Eisenbahn-Flachwagen unter Einhaltung der Lademaße und die Be- und Entladung über alle Arten von vorhandenen Rampen.

Die niedrige Bauhöhe des Tankaufliegers erlaubt eine freie Sicht des Fahrers aus dem Zugfahrzeug über den Anhänger. Durch Einbringen der Schwallbleche (20) und der zusammenpreßbaren Polster (19) in bereits vorhandene Tankfahrzeuge kann für diese die Gefahr des Umstürzens, des Verlusts von Ladegut und die Schädigung der Umwelt durch Auslaufen bei Unfällen gemindert werden.


## Patentansprüche

1. Behälterfahrzeug, insbesondere Sattelauflieger, für den Transport flüssiger und anderer tanktransportfähiger Güter, insbesondere gefährlicher Güter, vornehmlich mit Luftfederung ausgestattet, bei dem Teile des Transportbehälters den Raum zwischen den Fahrzeugrädern und vor und hinter den Rädern in Radhöhe die ganze Fahrzeugbreite einnehmen, der Transportbehälter in Längsrichtung mit Schwallblechen ausgestattet ist, die oben und seitlich mit der Tankhülle verbunden sind, dadurch gekennzeichnet, daß die Unterkante des Fahrzeugrahmens (3) mit bremsendem Belag versehen sein kann,
daß die Unterkante des Transportbehälters unter der Drehachse der Fahrzeugräder liegt, unterhalb der Unterkante des Transportbehälters liegende Teile des Fahrzeugrahmens (3) in ihrem hinteren Bereich nach oben abgeschrägt ausgeführt sein können und an ihrer der Fahrbahn zugewandten Seite zur Aufnahme von bremsenden Belägen und Vorrichtungen eingerichtet sein können,
der Tankraum (15) insbesondere, wenn er aus mehreren untereinander dichten Kammern besteht, mit seitlich am Behälter gelagerten auf gleichem Niveau wie der Boden des Behälters befindlichen Füll- und Entleerungsleitungen versehen sein kann,
die Luftfederung (5) oder eine entsprechende mechanische Federung so gestaltet ist, daß sie die Absenkung des Fahrzeugrahmens (3) bis auf den Boden während der Fahrt ermöglicht und dabei ein Teil oder das volle Gewicht des Fahrzeugs über den bremsenden Belag (13) direkt auf die Fahrbahn übertragen wird,

die Luftfederung (5) bei stehendem Fahrzeug zur vollständigen Entleerung des Transportbehälters einseitig absenkbar sein kann,

die Luftfederung der verschiedenen Achsen zur vollständigen Entleerung des Transportbehälters unterschiedlich absenkb ar sind,

der Abstand des Fahrzeugrahmens (3) von der Fahrbahn in Abhängigkeit von der Fahrzeuggeschwindigkeit automatisch oder von Hand durch Verändern der Luftmenge in den Luftfedern (5) einstellbar sein kann,

durch Einbau eines Impulsgebers (23) verbunden mit der Luftfederung (5), ihre Füllung regelnd zwischen einem Maximalwert und einer Größe, der Bodenfreiheit 0 des Fahrzeugs entsprechend, verbunden mit den Betriebs-Bremseinrichtungen, verbunden mit optischen und akustischen Warneinrichtungen im Farerhaus der Zugmaschine (1), durch handgesteuerte oder programmierte Impulse über die Luftfedern die Neigung des Behälterbodens beeinflussbar sein kann,

daß die Behälterwände bei gegebener Fahrzeugbreite ein größtmögliches Volumen umschließen, die Länge des Tankraumes dadurch minimierend,

zum Schutz des Behälters vor schädigenden Einflüssen Rahmen (3), Radkästen (4), Rahmenrückwand (5) und Außenverkleidung (9) unhüllend und schützend um den Behälter angebracht sind und seitlicher Rammschutz (7), stoßenergieverzehrende Einlagen (8), innenliegende Rammschutzverstärkungen(10) mit stoßverzehrenden Elementen (11) und Rahmen-Querstützen (12) vorgesehen sein können,

die von den Schwallblechen (20) gebildeten Räume mit Entlüftungsleitungen (21) versehen sein können, die bei geschlossenem Tankdeckel von diesem mit verschlossen werden oder deren Verschlüsse mit anderen zum Be- und Entladen erforderlichen Einrichtungen zwangsweise verknüpft sein können,

im Tankraum (15) zusammenpreßbare Polster an beliebiger Stelle angebracht sein können, die aus schaumigen Stoffen bestehen und in ladungsresistente flexible Materialien eingehüllt sind und bei Drücken, die höher als im normalen Betriebsablauf üblich sind, ihr Volumen vermindern, ein Bersten des Tankraums verhindernd,

die Zwischenwände (16) des Tankraumes (15) in vornehmlich aber nicht ausschließlich konzentrischer Form wellenförmig ausgebildet sind und bei einem Druck unterhalb des Berstdruckes des Tankraumes (15) ausbeulbar sind,

und daß die Tankdeckel (14) druckdicht entsprechend dem Berstdruck des Tankraumes ausgebildet sind.

2. Behälterfahrzeug nach Anspruch 1, dadurch gekennzeichnet, daß der Tankraum (15) in einem normgerechten Containerrahmen untergebracht ist,

der Rahmen des Behälters zwischen den unteren Eckbeschlägen (26) Radkastentaschen (27) bildend soweit eingezogen ist, daß er zwischen die vom Innenmaß zwischen den Radkästen (4) vorgegebenen Räume paßt, und daß der Fahrzeugrahmen (3) mit Container-Verriegelungen (28) ausgestattet ist.

3. Behälterfahrzeug nach Anspruch 1 und 2, dadurch gekennzeichnet, daß die Radkastentaschen (27) sich über die ganze Länge des Containerrahmens ausschließlich der Eckbeschläge (26) und der zugehörigen senkrechten Stützen ausdehnen.

4. Behälterfahrzeug nach Anspruch 1,2 und 3, dadurch gekennzeichnet, daß an der Oberseite des Rahmens (3) Container-Verriegelungen (29) zur Befestigung handelsüblicher Container angebracht sind.

5. Behälterfahrzeug mit Behälter als Tank-Container (25) nach Anspruch 1,2,3 und 4, dadurch gekennzeichnet, daß dieser Tankcontainer (25) nach Anspruch 2 neben dem Transport mit Behälterfahrzeugen nach Anspruch 1 mit Abmessungen und Eckbeschlägen (26) nach ISO- und anderen Normen, geeignet zum Transport mit allen für den Norm-Containertransport ausgestatteten Fahrzeugen aller Verkehrsarten ausgerüstet ist.

6. Behälterfahrzeug nach Anspruch 1, 2, 3, 4 und 5, dadurch gekennzeichnet, daß die zusammenpreßbaren Polster (19) unter der Decke des Tankraums (15)(vergl. Fig. 3) in Fahrzeuglängsrichtung einen Mittelraum freilassend angebracht sind und dieser Freiraum größer ist als der nach Vorschriften oder Erfahrungen nicht zu befüllende Resttankraum.

7. Transportfahrzeug nach Anspruch 1,2,3,4,5 und 6, dadurch gekennzeichnet, daß die zusammenpreßbaren Polster (19) aus baukastenartigen Teilen bestehen, die den räumlichen Gegebenheiten vorhandener Tankfahrzeuge anpaßbar sind.

8. Behälterfahrzeug nach Anspruch 1,2,3,4,5,6, und 7, dadurch gekennzeichnet, daß die zusammenpreßbaren Polster (19) das Volumen des für die Befüllung nicht zugelassenen Tankraumrestes einnehmen.

9. Behälterfahrzeug nach Anspruch 1,2,3,4,5,6,7 und 8, daduch gekennzeichnet, daß die Trenwände (16) des Tankraumes (15) ganz oder teilweise aus ladungsresistentem elastischen Material gefertigt und dicht mit den Behälterwandungen verbunden sind.

**Claims**

1. Tank vehicle, especially semi-trailer body, for the transportation of liquid and other goods capable to be transported in tanks, as there are perilous goods, mainly equipped with pneumatic cushioning, at which parts of the transport tank occupy the space between the vehicle wheels and in front of and behind the wheels on a level with the wheels the whole width of the vehicle, at which the transport tank is equipped longitudinally with wave deflection plates, which at the top and on the sides are connected with the tank case and at which the lower edge of the vehicle frame (3) can be equipped with a braking lining, specified in the way that the lower edge of the transport tank lies under the rotating axle of the vehicle wheels, that parts of the vehicle frame (3) lying under lower edge of the transport tank can be carried out bevelled and can be equipped at their side turned towards the roadway ready to receive braking linings and devices,

that the tank compartment (15) especially if it consists of several units isolated from each other can be equipped with filling and emptying ducts laid at the side of the tank being situated on the same level as the bottom of the tank,

that the pneumatic cushioning (5) or an equivalent mechanical suspension is constructed in such a manner that it enables the lowering of the vehicle frame (3) down to the ground during the ride and that at the same time or the whole weight of the vehicle is transmitted directly on the roadway by the braking lining (13),

that the air pneumatic cushioning (5) can be lowered to one side when the vehicle is standing, for complete emptying of the transport tank,

that the pneumatic cushioning of the various axles can be lowered in different ways for complete emptying of the transport tank, that the distance of the vehicle frame (3) to the roadway can be regulated (adjusted) automatically or by hand in altering the air quantity in the air springs (5) depending on the vehicle speed,

that by installing an impulse transmitter (23) connected to the pneumatic cushioning (5), regulating its fillings between a maximum value and a force corresponding with the ground scope 0 of the vehicle, connected with the operating-braking devices, connected with optical and acoustical warning installations in the driver's cab of the tractor (1), by hand-steered or programmed impulses through the air springs the incline of the tank bottom can be influenced,

that the tank sides at a given width of vehicle enclose a maximum volume and so shortening the length of the tank space, that to protect the tank against damaging influences frames (3), wheel cases (4), backside of frame (5) and exterior lining (9) are equipped around the tank covering and protecting it and ramming protection at the sides (7), inside protectors absorbing impulsive force (8), interior ramming protection reinforcements (10) with impact absorbing elements (11) and frame transverse supports (12) can be provided,

that the spaces formed by the wave deflection plates (20) can be provided with vent pipes (21) which when the tank cover is closed can be locked by this one at the same time and of which the covers can be linked with other devices that are necessary for charging and discharging,

that in the tank compartment (15) compressable stuffings can be fitted at any place which consist of foamy material and are enwrapped in charge-resisting flexible materials and under pressure that is higher than usual in the normal operational procedure reduce their volume in preventing a spitting of the tank compartment,

that the partition-walls (16) of the tank compartment (15) are formed mainly but not exclusively in a concentric wave-like shape and are able to be rounded out under a pressure below the burst pressure of the tank compartment and that the tank covers (14) are equipped pressure-tight according to the burst pressure of the tank space.

2. Tank vehicle according to claim 1 is specified in the way that the tank space (15) is installed in a container frame up to the standard specifications,

that the frame of the tank between the inferior corner-mountings (26) forming wheel case housings (27) is included to such an extent that it fits between the spaces existing between the wheel cases (4) according to the inside dimension, and that the vehicle frame (3) is equipped with a container-lockings (28).

3. Tank vehicle according to claim 1 and 2 is specified by the fact that the wheel case housings (27) occupy the whole length of the container frame without the corner-mountings (26) and the accompanying vertical supports.

4. The tank vehicle is specified according to claim 1, 2 and 3 in the way that at the upper side of the frame (3) container-lockings (29) are installed to fix containers customary in trade.

5. The tank vehicle with tank as tank-container (25) according to claim 1, 2, 3 and 4 is specified by the fact that this tank-container (25) is equipped according to claim 2 apart from the transportation by tank vehicles according to claim 1 with dimensions and corner-mountings (26) according to ISO- and other standards suitable for the transportation by all vehicles fitted out for the standard container transport

6. The tank vehicle is specified according to claim 1, 2, 3, 4 and 5 in the way that the compressable stuffings (19) are fixed under the top side of the tank space (15) (see FIG. 3) giving setting free a middle space in the longitudinal direction of the vehicle and that this free space is bigger than the remaining tank space which is supposed not to be filled according to instructions or experience.

7. The transport vehicle is specified according to claim 1, 2, 3, 4, 5 and 6 in the way the compressable stuffings (19) consist of the pre-fabricated element that can be fitted to the spacious data of existing tank vehicles.

8. The tank vehicle is specified according to claim 1, 2, 3, 4, 5, 6 and 7 in the way that the partition walls (16) of the tank compartment (15) are entirely or partially produced of elastic material which is resistant to the charge and that they are tightly connected to the sides of the tank.

9. The tank vehicle is specified according to claim 1, 2, 3, 4, 5, 6, 7 and 8 in the way that the partition walls (16) of the tank compartment (15) are entirely or partially produced of elastic material which is resistant to the charge and that they are tightly connected to the sides of the tank.

**Revendications**

1. Camion-citerne, surtout tracteur de semi-remorque, pour le transport de marchandises liquides et autrement transportables en citerne, spécialement de marchandises dangereuses, principalement équipé de suspension pneumatique, auquel des parties de la citerne de transport occupent la place entre les roues du véhicule et toute la largeur devant et derrière les roues en hauteur des roues du véhicule, auquel la citerne de transport est longitudinalement munie de tôles antivagues qui sont liées en haut et des côtés aux revètement de la citerne et où le bord inférieur du cadre du (3) véhicule peut être muni d'une garniture freinante, caractérisé en tant que le bord inférieur de la citerne de transport se trouve au-dessous de l'essieu tournant des roues du véhicule, que des parties du cadre du véhicule (3) se trouvant au-dessous du bord inférieur de la citerne de transport peuvent être exécutées obliquement et équipées de manière à recevoir de leur coté dirigé vers la chaussée des garnitures et installations freinantes, que le réservoir de remplissage (15), surtout quand il consiste de plusieurs chambres isolées l'une de l'autre et qu'il peut être muni de tuyaux de remplissage et de vidages situés à côté de la citerne se trouvant au méme niveau que le fond de la citerne, que la suspension pneumatique (5) ou une suspension mécanique conforme est réalisée de sorte à rendre possible l'abaissement du cadre du véhicule (3) jusqu'au fond pendant le roulage et qu'en même temps une partie ou bien le poids entier du véhicule est transmis directement à la chaussée par la garniture freinante, que la suspension pneumatique (5) du véhicule arrêté peut être baissée d'un côté pour le vidage complet de la citerne de transport, que les suspensions pneumatiques des essieux divers sont différemment abaissables, que la distance du cadre du véhicule (3) de la chaussée peut être réglée dépendant de la vitesse de véhicule automatiquement ou manuellement en altérant la quantité d'air dans les ressorts pneumatiques, que par l'installation d'un régulateur (23) relié à la suspension pneumatique (5), régulant son remplissage entre une valeur maximale et une grandeur correspondant à la latitude de sol du véhicule, relié aux installations de manoeuvre et de freinage, relié à des avertisseurs optiques ou acoustiques dans la cabine du tracteur (1) à l'aide d'impulsions manuelles ou programmées par les ressorts pneumatiques, l'inclinaison du fond de-citerne peut être influençable, que les parois de citerne à une largeur donnée du véhicule entourent un volume maximal, ainsi réduisant la longueur du réservoir de remplissage, que pour protéger la citerne d'influences nuisibles, le cadre (3), des cages de roues (4), la paroi arrière du cadre (5) et le revètement extérieur (9) sont installés autour de la citerne et qu'une protection latérale d'accrochage (7), des supports absorbant de l'énergie de choc (8), des renforcement intérieurs de protection d'accrochage (10) avec des éléments absorbants des chocs (11) et des appuis transversaux du cadre (12) peuvent être prévus, que les espaces formés des tôles antivagues (20) peuvent être munis de tuyaux d'aération (21) qui, le couvercle de la citerne étant fermé, sont fermés de celui-ci en méme temps ou dont les fermetures peuvent être rattachées forcément à d'autres installations nécessaires au chargement et au déchargement, que des rembourrages comprimables peuvent être installés dans le réservoir de remplissage (15) à n'importe quel endroit, qui consistent de matériaux mousseux et qui sont entourés de matériaux flexibles et résistants à la charge et qui réduisent leur volume à des pressions qui sont plus fortes que c'est l'usage lors d'un déroulement normal de manoeuvre, en empêchant une explosion du réservoir de remplissage, que les cloisons (16) du réservoir de remplissage (15) sont réalisées en principe mais pas exclusivement en forme concentrique et ondulée et qui sont susceptibles à 'étre gonflées à une pression au-dessous de la pression d'explosion, et que les couvercles de l'ouverture de remplissage du réservoir sont réalisés en tant que résistants à la pression correspondant à la pression d'explosion du réservoir de remplissage.

2. Camion-citerne d'après titre 1, caractérisé de manière que le réservoir de remplissage (15) est installé dans un cadre de container conforme aux normes, que le cadre de la citerne entre les garnitures des angles inférieurs (26) formant des cages de chapeaux de roues (27) est inclus de telle manière qu'il peut être intégré entre les espaces résultant de la mesure intérieure entre les chapeaux de roues (4) et que le cadre du véhicule (3 ) est équippé de verrouillages de container (28).

3. Camion-citerne d'après titre 1 et 2 , caractérisé de manière que les cages des chapeaux de roues (27) s'étalent le long entier du cadre de container y excluses les garnitures d'angles (26) et des appuis verticaux y apartenant.

4. Camion-citerne d'après titre 1, 2 et 3, caractérisé de manière que sur le côté supérieur du cadre (3) des verrouillages de container (29) sont installés pour fixer des containers d'usage.

5. Camion-cisterne avec cisterne comme container-réservoir (25) d'après titre 1, 2, 3, et 4, caractérisé de manière que ce container-réservoir (25) est muni d'après titre 2 à part du transport par des camions-citerne d'après titre 1 avec des mesures et des garnitures d'angles d'après la norme ISO et d'autres normes, approprié au transport par tous les véhicules équipés pour le transport-norme de containers de tous les modes de circulation.

6. Camion-citerne d'après titre 1, 2, 3, 4 et 5, caractérisé de manière que les rembourrages comprimables (19) sont installés sous la partie supérieure du réservoir de remplissage (15)(voir aussi illustration 3) cédant place en direction longitudinale du véhicule à une espace au milieu et que cet espace libre est plus grand que le reste du réservoir de remplissage qui d'après des prescriptions ou l'expérience ne doit pas être rempli.

7. Camion de transport d'après titre 1, 2, 3, 4, 5 et 6, caractérisé de manière que les rembourrages comprimables (19) se composent d'éléments préfabriqués qui s'adaptent aux données locales de camions-cisterne existants.

8. Camion-cisterne d'après titre 1, 2, 3, 4, 5, 6, 7 et 8, caractérisé de manière que les cloisons (16) du réservoir de remplissage (15) sont produites entièrement ou partiellement d'un matériau élastique résistant à la charge et qu'elles sont reliées tout près des parois de la citerne.

Fig. 1

Fig. 2

Fig. 3

Fig. 4

Fig. 5

Fig. 6

Fig. 7

Fig. 8